# EUROPÄISCHE PATENTANMELDUNG

(11) **EP 0 544 026 A1**
(43) Veröffentlichungstag der Anmeldung: **02.06.1993**
(21) Anmeldenummer: 91120162.2
(22) Anmeldetag: 26.11.1991
(51) Int. Cl.: G06F 9/38

(54) **Einrichtung zur Sprungvorhersage bei der Durchführung von Sprungbefehlen**

(71) Anmelder: Siemens Nixdorf Informationssysteme Aktiengesellschaft, D-33102 Paderborn (DE)
(72) Erfinder: Wiechert, Reiner, Dipl.-Ing., W-8011 Vaterstetten (DE)
(74) Vertreter: Fuchs, Franz-Josef, Dr.-Ing.

(57) **Zusammenfassung**

Bei der Befehlsverarbeitung nach dem Pipeline-Verfahren wird für jeden Sprungbefehl allen möglichen Kombinationen von n zurückliegenden, zu berücksichtigenden Sprungentscheidungen (z.B. HB0,HB1,HB2) jeweils eine Sprungvorhersage (z.B. PB1) zugeordnet und zusammen mit der aktuellen Historie des jeweiligen Sprungbefehls gespeichert. Diese Zuordnung ist dynamisch veränderbar, indem die der aktuellen Historie (H0) zugeordnete Sprungvorhersage (z.B. PB2) aus den jeweils für den durchzuführenden Sprungbefehl gespeicherten 2ⁿ Sprungvorhersagen (z.B. PB0...PB7) ausgewählt und bei einem falschen Vorhersageergebnis unmittelbar die aktuelle Sprungentscheidung als modifizierte Sprungvorhersage (PN) gemeinsam mit der geänderten Historie (HN) gespeichert wird.

## Beschreibung

Die Erfindung betrifft eine Einrichtung zur Sprungvorhersage bei der Durchführung von Sprungbefehlen in einer nach dem Pipeline-Prinzip betriebenen Verarbeitungseinheit gemäß dem Oberbegriff des Patentanspruches 1.

Bei der Befehlsverarbeitung nach dem Pipeline-Verfahren werden bekanntlich die zur Durchführung eines Befehls jeweils erforderlichen Phasen, wie z.B. Befehlsvorausholphase, Befehlsdekodierphase, Adreßrechnungsphase usw., für mehrere Befehle zeitlich überlappend zueinander ausgeführt. Dadurch lassen sich gegenüber der rein sequentiellen Verarbeitung Leistungssteigerungen erzielen. Die Befehlsreihenfolge in einem Programm kann durch Sprungbefehle verändert werden, nach deren Ausführung gegebenenfalls jeweils zu einem durch eine Zieladresse auswählbaren Befehl verzweigt wird. Diese Sprungbefehle verursachen wegen der vorübergehenden Unsicherheit, ob ein Sprung ausgeführt wird oder nicht, d.h. welcher Befehl als nächstfolgender im voraus zu holen ist, Verzögerungen im Programmablauf.

Zur Verminderung derartiger Verzögerungen erfolgt bei der Durchführung eines Sprungbefehls eine Sprungvorhersage anhand einer Tabelle (Branch History Table), in der die Befehlsadresse eines bereits zu einem früheren Zeitpunkt ausgeführten Sprunges zusammen mit der zugehörigen Zieladresse für das Vorausholen des nächstfolgenden Befehls jeweils einen Eintrag bilden. Die Tabelle wird durch die während der Befehlsvorausholphase bereitgestellte Sprungbefehlsadresse angesteuert. Ein anderes Verfahren zur Sprungvorhersage benutzt ebenfalls eine Tabelle (Decode-Time History Table), die jedoch während der Dekodierphase adressiert wird. Die Tabelleneinträge bestehen aus n zu berücksichtigenden Sprungentscheidungen (Historie), die bei bereits ausgeführten Sprungbefehlen in der Vergangenheit aufgetreten sind. Die durch die aktuelle Sprungbefehlsadresse ausgelesene Historie wird einer Verknüpfungsschaltung zugeführt, die das Vorhersageergebnis, d.h., ob ein Sprung ausgeführt wird oder nicht, liefert.

Aus der EP-B 0 084 114 ist eine Einrichtung zur Sprungvorhersage bei bedingten Sprungbefehlen unter Benutzung einer Tabelle bekannt, die die jeweils aus beispielsweise drei zurückliegenden Sprungentscheidungen bestehende Historie der jeweiligen Sprungbefehle enthält. Die Einrichtung weist eine Verknüpfungsschaltung auf, von der das Vorhersageergebnis aus den mit der Befehlsadresse ausgelesenen vorangehenden Sprungentscheidungen festgelegt wird. Darüber hinaus ist eine Korrekturschaltung vorgesehen, durch die abhängig von der aktuellen Sprungentscheidung des verarbeiteten Sprungbefehls die zugehörige Historie in der Tabelle modifiziert wird.

Ein weiteres Beispiel für die Verwendung einer Tabelle für die Sprungvorhersage bei Sprungbefehlen ist in "Generalized History Table for Branch Prediction", IBM Technical Disclosure Bulletin, Vol. 25. No. 1, June 1982, pages 99 - 101, offenbart. Die daraus bekannte Tabelle wird während der Befehlsvorausholphase mit der Befehlsadresse angesteuert, wobei bei Vorliegen eines Treffers ein aus Steuer- und Adresseninformationen gebildeter Eintrag ausgelesen und ein Vorhersageergebnis aus den bereitgestellten Informationen von einer Verknüpfungsschaltung erzeugt wird. Diese Informationen enthalten unter anderem die aus zurückliegenden Sprungentscheidungen bestehende Historie des jeweiligen Sprungbefehls, die zugehörige Zieladresse beim zuletzt ausgeführten Sprung sowie einige Statusinformationen über zurückliegende Vorhersageergebnisse. Eine Modifikation der Historie sowie der Statusinformationen findet bei jedem neuen Vorhersagevorgang für einen durchzuführenden Sprungbefehl statt. Zu diesem Zweck ist eine weitere Verknüpfungsschaltung vorgesehen.

Das alleinige Heranziehen von zurückliegenden Sprungentscheidungen für die Vorhersage eines auszuführenden Sprungs führt beispielsweise beim Auftreten von alternierenden Sprungfolgen eines Befehls zu stetig falschen Vorhersageergebnissen. Eine derartige statische Sprungvorhersage kann folglich bei bestimmten Sprungfolgen eine Reduktion der gesamten Verarbeitungsleistung bewirken. Eine Abhilfe des Problems durch Verwendung von Verknüpfungsschaltungen für die Ermittlung des Vorhersageergebnisses sowie für die Modifikation des ausgelesenen Tabelleneintrags anhand zusätzlicher Informationen über zurückliegende Vorhersagen erfordert einen erhöhten Aufwand bei jedem Vorhersagevorgang.

Es liegt der Erfindung die Aufgabe zugrunde, eine Sprungvorhersageeinrichtung der eingangs genannten Art zu schaffen, die im Mittel eine Erhöhung des Durchsatzes bei der Verarbeitung von Sprungbefehlen durch verbesserte Vorhersageergebnisse ermöglicht.

Diese Aufgabe wird erfindungsgemäß durch die kennzeichnenden Merkmale des Patentanspruches 1 gelöst.

Demnach wird für jeden Sprungbefehl allen möglichen Kombinationen von n zurückliegenden, zu berücksichtigenden Sprungentscheidungen jeweils eine Sprungvorhersage zugeordnet und zusammen mit der aktuellen Historie des jeweiligen Sprungbefehls gespeichert. Diese Zuordnung ist dynamisch veränderbar, indem die der aktuellen Historie zugeordnete Sprungvorhersage aus allen 2ⁿ gespeicherten Vorhersagen des durchzuführenden Sprungbefehls ausgewählt und bei einem falschen Vorhersageergebnis unmittelbar die aktuelle Sprungentscheidung als modifizierte Sprungvorhersage gemeinsam mit der geänderten Historie gespeichert wird.

Die Sprungvorhersageeinrichtung gemäß der Erfindung beinhaltet einen Lernprozeß derart, daß die ausgewählte Sprungvorhersage bei Nichtübereinstimmung mit der aktuellen Sprungentscheidung durch diese ersetzt und somit beim nächsten Auftreten der jeweiligen Sprungfolge ein korrektes Vorhersageergebnis erzielt wird. Die Dynamisierung der Sprungvorhersage ermöglicht eine flexible und schnelle Anpassung an beliebig vorgegebene Sprungfolgen eines Befehls und erfordert für jede Historienkombination lediglich die Speicherung einer einzigen zugeordneten Vorhersageinformation, die unmittelbar durch die aktuelle Sprungentscheidung gegebenenfalls modifiziert werden kann.

Auf eine fest verdrahtete und nicht mehr veränderbare Verknüpfungsschaltung für die Ermittlung der Sprungvorhersage aus einer Vielzahl von Informationen kann verzichtet werden. Der für das erfindungsgemäße Verfahren notwendige Speicheraufwand wird durch die Anzahl n der zu berücksichtigenden, zurückliegenden Sprungentscheidungen und damit durch die insgesamt 2ⁿ zugeordneten Sprungvorhersagen der einzelnen Sprungbefehle festgelegt.

Gemäß einer Weiterbildung der Erfindung können von allen Sprungvorhersagen diejenigen statisch festgelegt werden, denen eine Historie mit n identischen, zu berücksichtigenden Sprungentscheidungen zugeordnet wird. Die Kombination von dynamischer und statischer Vorhersage führt zu einer Reduzierung des Speicheraufwands in der Sprungvorhersageeinrichtung.

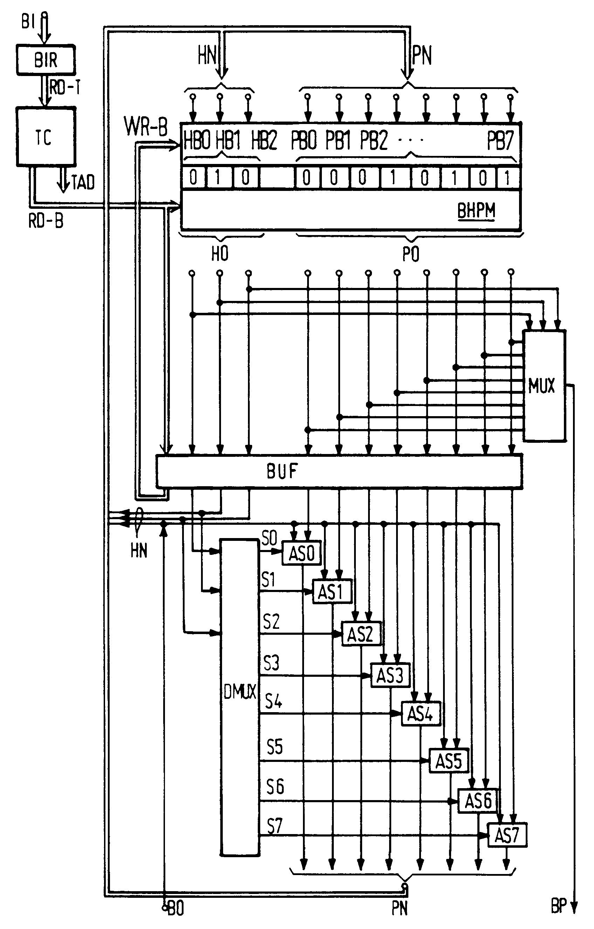

Die Erfindung wird anhand eines in der Zeichnung dargestellten Ausführungsbeispiels näher erläutert.

Dabei zeigt die Figur das Blockschaltbild einer erfindungsgemäßen Sprungvorhersageeinrichtung in einer nach dem PipelinePrinzip betriebenen Verarbeitungseinheit eines Datenverarbeitungssystems.

Bei der Befehlsverarbeitung nach dem Pipeline-Verfahren wird ein jeweils durchzuführender Sprungbefehl BI im voraus bereitgestellt und in einem Befehlsregister BIR zur Aufnahme der einzelnen Sprungbefehle gespeichert. Eine zum im voraus geholten Sprungbefehl BI gehörige Befehlsadresse RD-T wird an eine Speichereinrichtung TC angelegt. Die vorzugsweise als Cachespeicher ausgebildete Speichereinrichtung TC enthält für eine Vielzahl von Sprungbefehlen jeweils Sprungzieldaten TAD einschließlich einer Zieladresse für das Vorausholen des auf den durchzuführenden Sprungbefehl BI folgenden Befehls. Eine mit der Sprungbefehlsadresse RD-T identische Leseadresse RD-B wird zur Ansteuerung eines weiteren Speichers BHPM verwendet.

In diesem Speicher BHPM wird zu jedem adressierten Sprungbefehl nicht nur dessen aktuelle Historie, bestehend aus n zurückliegenden Sprungentscheidungen, sondern auch 2ⁿ Sprungvorhersagen gespeichert, die jeweils genau einer möglichen Kombination der n zu berücksichtigenden Sprungentscheidungen zugeordnet sind. Im Ausführungsbeispiel ist n = 3 gewählt, so daß jeder Eintrag im Speicher BHPM aus drei Historienbitstellen HB0, HB1 und HB2 sowie aus acht Vorhersagebitstellen PB0, PB1 ...PB7 besteht. Dabei wird die gespeicherte Information derart kodiert, daß der binäre Zustand l einen ausgeführten bzw. durchzuführenden Sprung anzeigt, während durch den binären Zustand 0 ein nicht ausgeführter bzw. durchzuführender Sprung angegeben wird. Die Zuordnung der möglichen Historienkombinationen zu den gespeicherten Vorhersagen pro Speichereintrag erfolgt vorzugsweise derart, daß der jeweils aus den Historienbitstellen HB0, HB1 und HB2 gebildeten Kombination 000 die Vorhersagebitstelle PB0, der Bitkombination 001 die Vorhersagebitstelle PB1, usw. entspricht.

Mit der Leseadresse RD-B wird der zu dem jeweils durchzuführenden Sprungbefehl gehörige Speichereintrag aus dem Speicher BHPM ausgelesen. Die 2ⁿ gespeicherten Vorhersagen P0 und die n zurückliegenden Entscheidungen der aktuellen Historie H0 werden einer Multiplexeinrichtung MUX zugeführt, die die der aktuellen Historie H0 zugeordnete Sprungvorhersage auswählt. Im gewählten Ausführungsbeispiel nehmen die drei zu berücksichtigenden, zurückliegenden Sprungentscheidungen die binären Werte 010 an, so daß die Vorhersagebitstelle PB2 mit dem gespeicherten binären Wert 0 am Ausgang der Multiplexeinrichtung MUX anliegt. Dieser Ausgang liefert folglich die Sprungvorhersage BP für den durchzuführenden Sprungbefehl. Gemäß dem gewählten Beispiel (PB2=0) zeigt die Vorhersagebitstelle PB2 an, daß kein Sprung ausgeführt wird.

Der mit jeder Leseoperation bereitgestellte, zum jeweils durchzuführenden Sprungbefehl gehörige Speichereintrag, aus dem die jeweilige Sprungvorhersage BP hervorgeht, wird in einer Puffereinrichtung BUF zusammen mit der an den Speicher BHPM angelegten Leseadresse RD-B zwischengespeichert. Die Zwischenspeicherung ist erforderlich, um die Zeit zwischen der Sprungvorhersage BP und einer für den durchzuführenden Befehl getroffenen aktuellen Sprungentscheidung B0 zu überbrücken. Diese Puffereinrichtung BUF kann beispielsweise aus mehreren Registerketten stufenweise aufgebaut sein.

Die Ausgänge der Puffereinrichtung BUF, an denen die zwischengespeicherte Historie H0 anliegt, sind mit den Eingängen einer weiteren Multiplexeinrichtung DMUX verbunden. Diese Einrichtung DMUX liefert aus den n zu berücksichtigenden Sprungentscheidungen 2ⁿ Ausgangssignale, im gewählten Beispiel die Signale S0...S7. Die Ausgangssignale S0...S7 bilden die Steuersignale von parallel geschalteten Auswahlschaltern AS0...AS7, denen jeweils die aktuelle Sprungentscheidung B0 als ein Eingangssignal sowie eine der in der Puffereinrichtung BUF zwischengespeicherten Vorhersagen P0 als ein weiteres Eingangssignal zugeführt werden.

Abhängig von der Bitkombination der aktuellen Historie H0 wird von der Multiplexeinrichtung DMUX ein einziges Steuersignal gesetzt, das die Durchschaltung der aktuellen Sprungentscheidung B0 anstelle der gespeicherten Vorhersage an den Ausgang des zugehörigen Auswahlschalters bewirkt. Die anderen Steuersignale weisen einen ungesetzten Zustand auf, so daß immer die zwischengespeicherten Vorhersagen gleichzeitig von den jeweiligen Auswahlschaltern durchgeschaltet werden. Auf diese Weise kann von allen 2ⁿ Sprungvorhersagen die jeweils der aktuellen Historie H0 zugeordnete Sprungvorhersage, z.B. PB2, ausgewählt und bei einem falschen Vorhersageergebnis durch die aktuelle Sprungentscheidung B0 ersetzt werden.

Im gewählten Beispiel wird entsprechend der gespeicherten Historienbitkombination 010 das Steuersignal S2 aktiviert und unmittelbar die aktuelle Sprungentscheidung B0, die beispielsweise die Ausführung eines Sprungs für den durchzuführenden Sprungbefehl anzeigt (B0=1), vom Auswahlschalter AS2 als neue Sprungvorhersage zusammen mit den restlichen, unveränderten Sprungvorhersagen in den Speicher BHPM zurückgeschrieben. Zu diesem Zweck wird die in der Puffereinrichtung BUF hinterlegte Adresse als Schreibadresse WR-B an den Speicher BHPM angelegt, in den dann der modifizierte Speichereintrag, bestehend aus den an den Ausgängen der Auswahlschalter anliegenden 2ⁿ Sprungvorhersagen PN einschließlich der geänderten Sprungvorhersage PB2 und aus der durch die aktuelle Sprungentscheidung BO geänderten Historie HN, eingetragen wird. Die Modifikation der ausgelesenen Historie H0 erfolgt in der Weise, daß als niederwertigste Vorhersagebitstelle HB2 die aktuelle Sprungentscheidung B0 sowie die bisherigen Vorhersagebitstellen HB1 und HB2 um jeweils eine Bitstelle verschoben eingetragen werden.

Die im Speicher BHPM eingetragene Historienkombination 010 des durchzuführenden Sprungbefehls stellt beispielsweise einen Ausschnitt einer Sprungfolge 010101... dar, die angibt, daß der Sprungbefehl bei jedem Auftreten seine Sprungrichtung ändert. Derartige Sprungfolgen führen bei statischen Sprungvorhersageverfahren stetig zu falschen Vorhersageergebnissen. Im gewählten Ausführungsbeispiel wird die ermittelte Sprungvorhersage, die sich als falsch herausstellt, unmittelbar durch die aktuelle Sprungentscheidung ersetzt, was beim nächsten Aufteten der Historienkombination 010 für diesen Sprungbefehl ein richtiges Vorhersageergebnis zur Folge hat.

Diese dynamisch veränderbare Zuordnung der Historie zu den gespeicherten Sprungvorhersagen ermöglicht eine schnelle Anpassung der Sprungvorhersage an vorgegebene Sprungfolgen. Bei der Durchführung von zwei unterschiedlichen, in der Vergangenheit identisch ausgeführten Sprungbefehlen können sich verschiedene Sprungvorhersagen ergeben. Die Sprungvorhersageeinrichtung gemäß der Erfindung liefert insbesondere für die Sprungfolgen, bei denen die Rate der falschen Vorhersageergebnisse stark ansteigt, verbesserte Vorhersageergebnisse.

Für den Fall, daß von den 2ⁿ Sprungvorhersagen einige statisch, d.h. nicht dynamisch veränderbar, festgelegt werden, läßt sich die Sprungvorhersage gemäß der Erfindung weiter optimieren. Dies ist insbesondere bei einer Sprungfolge von Vorteil, die eine Vielzahl von aufeinanderfolgenden identischen Sprungentscheidungen aufweist, beispielsweise bei einer Sprungfolge 111111110111111110... Wird der Speichereintrag eines Sprungbefehls mit einer aus identischen, zurückliegenden Sprungentscheidungen bestehenden Historie, beispielsweise der Historie 111, adressiert, erfolgt durch die Multiplexeinrichtung MUX eine statische Vorhersage BP, daß der Sprung wiederum ausgeführt wird.

Der Speicheraufwand bei der Sprungvorhersageeinrichtung gemäß dem gewählten Beispiel läßt sich durch die Kombination von statischer und dynamischer Sprungvorhersage reduzieren, indem die der Bitkombination 000 zugeordnete Vorhersagebitstelle PB0 und die der Bitkombination 111 zugeordnete Vorhersagebitstelle PB7 nicht in den Speicher BHPM eingetragen und somit nicht geändert, sondern statisch an die Multiplexeinrichtung MUX angelegt werden.

Die binären Werte für die einzelnen Sprungvorhersagebitstellen zu Beginn der Befehlsverarbeitung können beispielsweise in Abhängigkeit von der für jede mögliche Historienbitkombination vorliegenden Anzahl der Zustände 1 und 0 gebildet werden.

## Patentansprüche

1. Einrichtung zur Sprungvorhersage bei der Durchführung von Sprungbefehlen in einer nach dem Pipeline-Prinzip betriebenen Verarbeitungseinheit, bei der die Ausführung eines Sprunges anhand einer für jeden Sprungbefehl gespeicherten Historie (H0), bestehend aus einer vorgegebenen Anzahl von n zurückliegenden Sprungentscheidungen (z.B. HB0,HB1,HB2) und modifizierbar entsprechend der aktuellen Sprungentscheidung (B0) für den durchzuführenden Befehl, vorhergesagt wird, und bei der durch eine Sprungbefehlsadresse (RD-T) die Zieladresse (TAD) eines auf den ausgeführten Sprung folgenden Befehls ausgewählt wird, **dadurch gekennzeichnet,** daß für jeden Sprungbefehl allen möglichen Kombinationen von n zurückliegenden, zu berücksichtigenden Sprungentscheidungen (z.B. HB0,HB1, HB2) jeweils eine Sprungvorhersage (z.B. PB1) zugeordnet und zusammen mit der aktuellen Historie (H0) gespeichert wird, und daß die der aktuellen Historie (H0) zugeordnete Sprungvorhersage (z.B. PB2) aus den jeweils für den durchzuführenden Sprungbefehl gespeicherten 2ⁿ Sprungvorhersagen (z.B. PB0... PB7) ausgewählt und bei einem falschen Vorhersageergebnis unmittelbar durch die aktuelle Sprungentscheidung (B0) ersetzt wird, die als neue Sprungvorhersage (PN) gemeinsam mit der geänderten Historie (HN) gespeichert wird.

2. Einrichtung nach Anspruch 1, **dadurch gekennzeichnet,** daß einer Kombination von n identischen zurückliegenden Sprungentscheidungen (z.B. HB0,HB1, HB2) jeweils eine festgelegte, nicht veränderbare Sprungvorhersage zugeordnet wird.
